# EUROPEAN PATENT APPLICATION

(11) **EP 2 234 189 A1**
(43) Date of publication of application: **29.09.2010**
(21) Application number: 10003211.9
(22) Date of filing: 25.03.2010
(51) Int. Cl.: H01M 4/24, H01M 4/32, H01M 4/38, H01M 10/28, H01M 10/34, H01M 10/44

(54) **Alkaline storage battery system with partial charge-discharge**

(30) Priority: 26.03.2009 JP 2009076487
(71) Applicant: SANYO ELECTRIC CO., LTD., Moriguchi-shi, Osaka 570-8677 (JP)
(72) Inventor: Sugii, Hiromasa, Moriguchi-shi, Osaka 570-8677 (JP); Ochi, Makoto, Moriguchi-shi, Osaka 570-8677 (JP); Yoshida, Shuhei, Moriguchi-shi, Osaka 570-8677 (JP); Ako, Atsutoshi, Moriguchi-shi, Osaka 570-8677 (JP); Harada, Yasuyuki, Moriguchi-shi, Osaka 570-8677 (JP); Kitaoka, Kazuhiro, Moriguchi-shi, Osaka 570-8677 (JP); Takee, Masao, Moriguchi-shi, Osaka 570-8677 (JP)
(74) Representative: Glawe, Delfs, Moll

(57) **Abstract**

In the alkaline storage battery system, zinc (Zn) is added to a nickel positive electrode 11 with an addition amount of 8% by mass or less with respect to the mass of nickel. A hydrogen storage alloy of a negative electrode 12 has an A₅B₁₉ type crystal structure, with a stoichiometric ratio (B/A) representing the molar ratio of component B to component A ranging from 3.6 to 3.9, inclusive, and is represented by a general formula of Lnₗ₋ₓMgₓNi_{y-a}Mₐ (where Ln is an element selected from rare earth elements including Y, and M is at least one kind of element selected from Al, Co, Mn, and Zn) in which the content of the element M is 1.0% by mass or less. An electrolyte has a concentration of 6.5 mol/L or less and contains Li of 0.3 mol/L or more, and the alkaline storage battery system is arranged to control partial charging discharging.

## Description

### TECHNICAL FIELD

The present invention relates to an alkaline storage battery system suitable for vehicle applications such as for a hybrid electric vehicle (HEV) and for a pure electric vehicle (PEV), and especially relates to an alkaline storage battery system that includes, along with an alkaline electrolyte, an electrode group composed of a hydrogen storage alloy negative electrode using a hydrogen storage alloy as a negative electrode active material, a nickel positive electrode, and a separator, in an outer can, and that is subjected to partial charge-discharge control.

### BACKGROUND ART

Recently, secondary batteries have been used for various applications, for example, cell phones, personal computers, power tools, HEVs, and PEVs. Alkaline storage batteries have come to be used for these applications. A complete charge-discharge control method in which complete charging-discharging is performed is applied to alkaline storage batteries used for consumer applications such as cell phones, personal computers, and power tools, among those for the above-mentioned applications.

It is known that addition of zinc to a positive electrode binder having nickel hydroxide as a main positive electrode active material is generally effective in improving the cycle life of an alkaline storage battery in which complete charging-discharging is performed. In this case, zinc is generally added to the positive electrode binder so as to be approximately 15% by mass with respect to the mass of nickel as the positive electrode active material. The addition of such amount of zinc makes it possible to inhibit swelling of the positive electrode active material associated with the charge-discharge cycle, thus extending the life of the battery.

On the other hand, in alkaline storage batteries used for applications relating to vehicles such as HEVs and PEVs, a partial charge-discharge control method is widely used for performing partial charging-discharging. For example, JP-A-2005-108610 discloses an alkaline storage battery suitable for the partial charge-discharge control method for performing partial charging-discharging.

However, in such alkaline storage batteries, with which partial charging-discharging is performed, used for such applications relating to vehicles as HEVs and PEVs, it is known that a memory effect is a main factor for reduction of the partial charge-discharge cycle life. Accordingly, it has been revealed that in the alkaline storage batteries used for such applications, the addition of zinc to the positive electrode binder by approximately 15% by mass with respect to the mass of nickel as the positive electrode active material does not improve the charge-discharge cycle life, but adversely affects the battery with the added zinc serving as a resistance component in the form, for example, of reducing the battery output.

Furthermore, in the alkaline storage battery disclosed in JP-A-2005-108610, the concentration of an alkaline electrolyte is as high as 7 mol/L (7 N), and the amount of lithium (Li) contained in the alkaline electrolyte is as small as 0.05 mol/L (0.05 N). As a result, it has been revealed that the memory effect is not improved and therefore a charge-discharge cycle characteristic is not improved.

Therefore, the inventors of the present invention have proposed in Japanese Patent Application No. 2007-253991 an alkaline storage battery system with which partial charging-discharging is performed, that is capable of synergistically exhibiting an effect of reducing the addition amount of zinc to a positive electrode binder, an effect of reducing the concentration of an alkaline electrolyte, and an effect of increasing the content of lithium in the alkaline electrolyte.

However, when the technology for memory effect inhibition in the alkaline storage battery system proposed in Japanese Patent Application No. 2007-253991 is applied, a problem arises where a negative-electrode discharge reserve greatly increases from the previous value. In this case in which the negative-electrode discharge reserve increases, a problem arises in long-term characteristics where consumption of the electrolyte is accelerated, or gas leakage occurs due to an increase in internal pressure, thereby reducing the reliability of the battery. Moreover, when the negative-electrode discharge reserve is reduced, a new problem arises where a low-temperature output is reduced. As a result, in order to ensure reliability over a long period of time, it is necessary to achieve both reduction in the negative-electrode discharge reserve and maintenance of the low-temperature output.

### SUMMARY

Therefore, an advantage of some aspects of the invention is to provide an alkaline storage battery system that maintains a technology for memory effect inhibition in the alkaline storage battery system and that is capable of achieving both reduction in a negative-electrode discharge reserve and maintenance of a low-temperature output, thereby ensuring reliability over a long period of time.

According to a first aspect of the invention, in an alkaline storage battery system, zinc (Zn) is added to nickel hydroxide that is a main positive electrode active material in a nickel positive electrode with an addition amount of 8% by mass or less with respect to the mass of nickel in the positive electrode active material, a hydrogen storage alloy has a crystal structure of an A₅B₁₉ type structure, with a stoichiometric ratio (B/A) representing the molar ratio of component B to component A of the A₅B₁₉ type structure ranging from 3.6 to 3.9, inclusive, and is represented by a general formula of Ln₁₋ₓMgₓNi_{y-a}Mₐ (where Ln is an element selected from rare earth elements including yttrium (Y), and M is at least one kind of element selected from Al, Co, Mn, and Zn) in which the content of the element M is 1.0% by mass or less, an alkaline electrolyte has a concentration of 6.5 mol/L or less and contains lithium (Li) of 0.3 mol/L or more, and the alkaline storage battery system is arranged to control partial charging-discharging.

Here, in the alkaline storage battery system with which the partial charging-discharging is performed, when the addition amount of zinc to the positive electrode binder is reduced to 8% by mass or less with respect to the mass of nickel in the positive electrode active material, and when the alkaline electrolyte has a concentration of 6.5 mol/L (6.5 N) or less and contains lithium (Li) of 0.3 mol/L (0.3 N) or more, the memory effect is improved, but on the other hand, the negative-electrode discharge reserve increases.

Therefore, in order to reduce accumulation of the negative-electrode discharge reserve, the invention uses as a negative electrode active material the hydrogen storage alloy that has the crystal structure of the A₅B₁₉ type structure, with a stoichiometric ratio (B/A) representing the molar ratio of component B to component A of the A₅B₁₉ type structure ranging from 3.6 to 3.9, inclusive, and that is represented by a general formula of Ln₁₋ₓMgₓNi_{y-a}Mₐ (where Ln is an element selected from rare earth elements including yttrium (Y), and M is at least one kind of element selected from Al, Co, Mn, and Zn) in which the content of the element M is 1.0% by mass or less.

By this arrangement, it is possible to reduce accumulation of the negative-electrode discharge reserve and to improve the long-term reliability from the previous level while maintaining the technology for memory effect inhibition without reducing the low-temperature output. In this case, the nickel positive electrode is preferably formed of a nickel sintered substrate having pores filled with at least nickel hydroxide as the main positive electrode active material and zinc by impregnation treatment with an impregnation liquid and alkaline treatment. In addition, it is preferred that the alkaline electrolyte be a mixed alkaline aqueous solution containing sodium hydroxide, potassium hydroxide, and lithium hydroxide.

It is sufficient that the partial charging-discharging be controlled so that discharging is stopped and charging is started when the voltage reaches a level at which no variation occurs among a plurality of batteries combined in a battery pack (in this case, a voltage level reaching a state of charge (SOC) of 10%), and so that charging is stopped and discharging is started when the voltage reaches a level just before reaching the oxygen overvoltage (in this case, a voltage level reaching an SOC of 95%). Practically, it is preferred that the partial charging-discharging be controlled so that discharging is stopped and charging is started when the voltage level reaches an SOC of 20%, and so that charging is stopped and discharging is started when the voltage level reaches an SOC of 80%.

Some aspects of the invention provide an alkaline storage battery system capable of ensuring reliability over a long period of time because it is possible to achieve both reduction in the negative-electrode discharge reserve and maintenance of the low-temperature output even when the technology for memory effect inhibition remains to be used.

### BRIEF DESCRIPTION OF THE DRAWING

The invention will be described with reference to the accompanying drawing, wherein like numbers reference like elements.

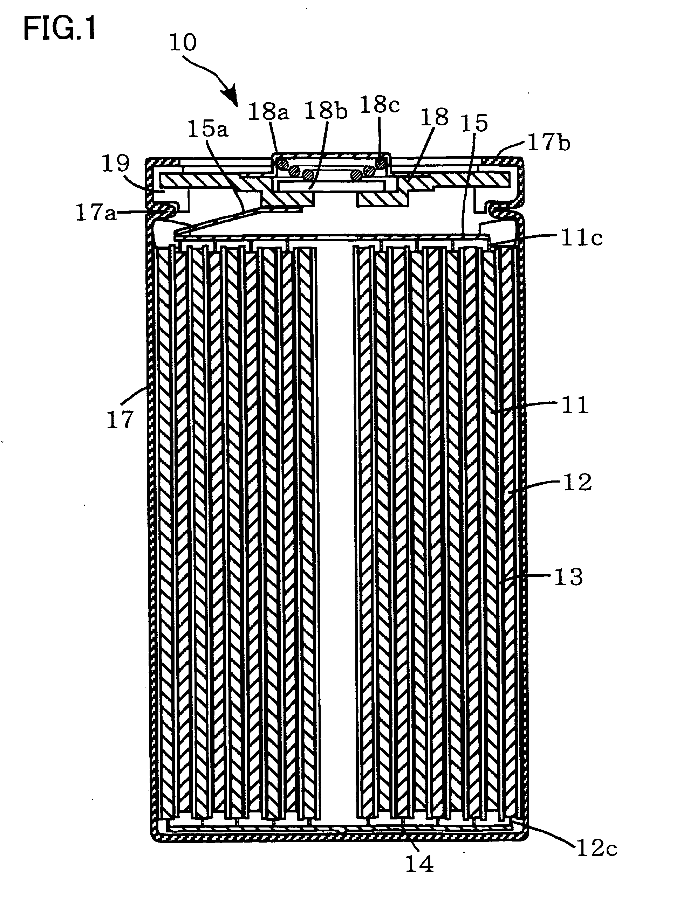

Fig. 1 is a sectional view schematically showing a nickel-hydrogen storage battery according to an embodiment of the invention.

### DESCRIPTION OF EXEMPLARY EMBODIMENTS

Embodiments of the invention will now be described below in detail, but the invention is not limited to the embodiments and may be variously modified within the scope of the purpose of the invention.

### 1. Nickel Positive Electrode

A nickel positive electrode 11 of the invention was formed by filling nickel hydroxide and zinc hydroxide so as to reach a predetermined filling amount in pores of a nickel sintered substrate serving as a substrate.
In this case, the nickel sintered substrate was prepared in the following manner. For example, methyl cellulose (MC) serving as a thickener, polymer hollow microspheres (for example, with a pore diameter of 60 µm), and water were mixed with nickel powder, and the whole was kneaded to prepare a nickel slurry. Next, the nickel slurry was coated on both sides of a punching metal of a nickel-plated steel plate, then the punching metal was heated at 1000°C in a reducing atmosphere to remove the thickener and polymer hollow microspheres, and the nickel powder was sintered with each other to prepare the nickel sintered substrate.

Then, an impregnation treatment to impregnate the following impregnation liquid into the nickel sintered substrate thus obtained and an alkaline treatment with an alkaline treatment liquid were repeated a predetermined number of times to fill a predetermined amount of nickel hydroxide and zinc hydroxide in the pores of the nickel sintered substrate, and then the substrate was cut into a predetermined size (for example, 80.0 cm x 5.0 cm) to prepare the nickel positive electrode 11 filled with a positive electrode active material. In this case, a mixed aqueous solution prepared so as to have a predetermined molar ratio of nickel nitrate to zinc nitrate was used as the impregnation liquid, and a sodium hydroxide (NaOH) aqueous solution having a specific gravity of 1.3 was used as the alkaline treatment liquid. Note that, for purposes such as improving high temperature characteristics, an impregnation liquid further containing cobalt nitrate, yttrium nitrate, ytterbium nitrate, or the like may be used.

Then, the impregnation treatment and the alkaline treatment were conducted as follows so that the content ratio of the mass of zinc in the zinc hydroxide to the mass of nickel in the nickel hydroxide serving as the positive electrode active material is 3% by mass to 14% by mass. That is, first of all, after the nickel sintered substrate was immersed in the impregnation liquid to impregnate the impregnation liquid into the fine pores of the nickel sintered substrate, the substrate was dried and then immersed in the alkaline treatment liquid to perform the alkaline treatment. Nickel salt, zinc salt, and so on were converted into nickel hydroxide, zinc hydroxide, and so on by the treatment. Then, the substrate was washed sufficiently with water to remove the alkaline solution, and then dried. A series of the filling operations of the positive electrode active material as described above, including impregnation with the impregnation liquid, drying, immersion into the alkaline treatment liquid, water washing, and drying, was repeated 6 times to fill a predetermined amount of the positive electrode active material in the nickel sintered substrate.

In this case, an electrode with a ratio of the mass of zinc to the mass of nickel of 14% by mass was regarded as a nickel positive electrode x1. In the same manner, an electrode with a ratio of the mass of zinc to the mass of nickel of 8% by mass was regarded as a nickel positive electrode x2, an electrode with a ratio of 7% by mass as a nickel positive electrode x3, an electrode with a ratio of 5% by mass as a nickel positive electrode x4, and an electrode with a ratio of 3% by mass as a nickel positive electrode x5.

### 2. Hydrogen Storage Alloy Negative Electrode

A hydrogen storage alloy negative electrode 12 was formed by filling hydrogen storage alloy slurry in a negative electrode substrate of punching metal. In this case, for example, neodymium (Nd), lanthanum (La), magnesium (Mg), nickel (Ni), cobalt (Co), and aluminum (Al) were mixed with a predetermined molar ratio, and then the mixture was melted in a high-frequency induction heater and then rapidly cooled to prepare ingots of hydrogen storage alloys α1 to α10 that are represented by a general formula of Ln₁₋ₓMgₓNi_{y-a}Mₐ (where Ln is an element selected from rare earth elements including yttrium (Y), and M is at least one kind of element selected from Al, Co, Mn, and Zn). Next, by using a DSC (differential scanning calorimeter), melting points (Tm) were measured for the hydrogen storage alloys α1 to α10 thus obtained. Then, heat treatment was conducted for a predetermined time (in this case, 10 hours) at a temperature lower by 30°C than the melting point (Tm) (Ta = Tm - 30°C) of each of the hydrogen storage alloys α1 to α10.

By analyzing the compositions of the hydrogen storage alloys α1 to α10 using inductively coupled plasma (ICP) spectrometry, it has been found that the hydrogen storage alloy α1 is represented by a compositional formula of Nd_{0.90}Mg_{0.10}Ni_{3.20}Al_{0.20}CO_{0.10} as shown in Table 1 below. In the same manner, it has been found that the hydrogen storage alloy α2 is represented by a compositional formula of La_{0.18}Nd_{0.71}Mg_{0.11}Ni_{3.20}Al_{0.10}Co_{0.10}, the hydrogen storage alloy α3 is represented by a compositional formula of La_{0.18}Nd_{0.71}Mg_{0.11}Ni_{3.40}Al_{0.10}, the hydrogen storage alloy α4 is represented by a compositional formula of La_{0.18}Nd_{0.71}Mg_{0.11}Ni_{3.61}Al_{0.20}, and the hydrogen storage alloy α5 is represented by a compositional formula of La_{0.18}Nd_{0.71}Mg_{0.11}Ni_{3.88}Al_{0.11}.

It has also been found that the hydrogen storage alloy α6 is represented by a compositional formula of La_{0.18}Nd_{0.71}Mg_{0.11}Ni_{3.50}Al_{0.10}, the hydrogen storage alloy α7 is represented by a compositional formula of La_{0.18}Nd_{0.71}Mg_{0.11}Ni_{3.71}Al_{0.09}, the hydrogen storage alloy α8 is represented by a compositional formula of La_{0.18}Nd_{0.71}Mg_{0.11}Ni_{3.71}Al_{0.05}, the hydrogen storage alloy α9 is represented by a compositional formula of La_{0.18}Nd_{0.71}Mg_{0.11}Ni_{3.85}Al_{0.05}, and the hydrogen storage alloy α10 is represented by a compositional formula of La_{0.18}Nd_{0.71}Mg_{0.11}Ni_{3.67}Al_{0.13}. Note that Table 1 below also shows molar ratios of component A (rare earth element (Ln) and Mg), molar ratios of component B (molar ratios of y), values of B/A (stoichiometric ratios of component B to component A), and contents of element M (% by mass) in the case in which each of the hydrogen storage alloys α1 to α10 is represented by a general formula of LN₁₋ₓRgₓNi_{y-a}Mₐ (where M is an element composed of at least one of Co, Mn, and Zn).

Then, after coarsely breaking lumps of the hydrogen storage alloys α1 to α10, the broken pieces were mechanically pulverized in an inert gas atmosphere until a surface area (m²) per mass (1g) of 0.2 (m²/g) is achieved to prepare hydrogen storage alloy powder. Next, crystal structures of the hydrogen storage alloy powders α1 to α10 were identified with powder X-ray diffractometry using an X-ray diffractometer with a Cu-Kα tube as an X-ray source. In this case, X-ray diffraction measurements were conducted at a scan speed of 1°/min, a tube voltage of 40 kV, a tube current of 300 mA, a scan step of 1°, and measurement angles (20) of 20° to 50°. The crystal structures of the hydrogen storage alloy α1 to α10 were identified from XRD profiles thus obtained, by using JCPDS card charts.

Here, in each of the crystal structures, the A₅B₁₉ type structure was regarded as a Ce₅Co₁₉ type structure or a Pr₅Co₁₉ type structure, and the A₂B₇ type structure was regarded as a Ce₂Ni₇ type structure. Then, each comparative strength ratio of a strength value at a diffraction angle of each structure based on the JCPDS to the maximum strength value at 42° to 44° was applied to the obtained XRD profile to obtain the results as shown in Table 1 below, giving main alloy phases of the hydrogen storage alloys α1 to α10.

**[Table 1]**

| Alloy type | Ln₁₋ₓMgₓN_{y-a}Mₐ | Component A | Component B | B/A | M(%) | Main alloy phase |
|---|---|---|---|---|---|---|
| α1 | Nd_{0.90}Mg_{0.10}Ni_{3.20}Al_{0.20}Co_{0.10} | 1.00 | 3.50 | 3.50 | 3.4 | A₂B₇ |
| α2 | La_{0.18}Nd_{0.71}Mg_{0.11}Ni_{3.20}Al_{0.10}Co_{0.10} | 1.00 | 3.40 | 3.40 | 2.6 | A₂B₇ |
| α3 | La_{0.18}Nd_{0.71}Mg_{0.11}Ni_{3.40}Al_{0.10} | 1.00 | 3.50 | 3.50 | 0.8 | A₂B₇ |
| α4 | La_{0.18}Nd_{0.71}Mg_{0.11}Ni_{3.61}Al_{0.20} | 1.00 | 3.81 | 3.81 | 1.6 | A₅B₁₉ |
| α5 | La_{0.18}Nd_{0.71}Mg_{0.11}Ni_{3.88}Al_{0.11} | 1.00 | 3.99 | 3.99 | 0.8 | A₅B₁₉ |
| α6 | La_{0.18}Nd_{0.71}Mg_{0.11}Ni_{3.50}Al_{0.10} | 1.00 | 3.60 | 3.60 | 0.8 | A₅B₁₉ |
| α7 | La_{0.18}Nd_{0.71}Mg_{0.11}Ni_{3.71}Al_{0.09} | 1.00 | 3.80 | 3.80 | 0.7 | A₅B₁₉ |
| α8 | La_{0.18}Nd_{0.71}Mg_{0.11}Ni_{3.71}Al_{0.50} | 1.00 | 3.76 | 3.76 | 0.4 | A₅B₁₉ |
| α9 | La_{0.18}Nd_{0.71}Mg_{0.11}Ni_{3.85}Al_{0.05} | 1.00 | 3.90 | 3.90 | 0.4 | A₅B₁₉ |
| α10 | La_{0.18}Nd_{0.71}Mg_{0.11}Ni_{3.67}Al_{0.13} | 1.00 | 3.80 | 3.80 | 1.0 | A₅B₁₉ |

The results shown in Table 1 above have demonstrated the following. That is, when the stoichiometric ratio of B/A is 3.50 or less as in the cases of the alloys α1 to α3, the A₂B₇ type structure is the main alloy phase. On the other hand, when the stoichiometric ratio y of B/A is 3.60 or more as in the cases of alloys α4 to α10, the A₅B₁₉ type structure is the main alloy phase.

Next, each of the hydrogen storage alloys was heat-treated at 1000 °C in an argon gas atmosphere for 10 hours to control the crystal structure in the ingot. The obtained hydrogen storage alloy was mechanically pulverized in an inert atmosphere, and the alloy powder between 400 and 200 mesh was selected by screening. An average particle diameter which indicated 50% of mass integral was found to be 25 µm by a measurement of particle size distribution of the powder using a laser diffraction/scattering particle size distribution analyzer. The obtained powder was regarded as the hydrogen storage alloy powder. Then, 0.5 parts by mass of latex of SBR (styrene-butadiene rubber) as a water insoluble polymer binder, 0.03 parts by mass of CMC (carboxymethyl cellulose) as a thickener, and a suitable amount of pure water were added to 100 parts by mass of the obtained hydrogen storage alloy powder, and the whole was kneaded to prepare a hydrogen storage alloy slurry. Then, the obtained hydrogen storage alloy slurry was coated on both sides of the negative electrode substrate of the punching metal (made of nickel-plated steel plate), and the substrate was dried at 100 °C, rolled so as to be a predetermined packing density, and then cut into a predetermined size to prepare each of the hydrogen storage alloy negative electrodes 12 (y1 to y10).

Here, the hydrogen storage alloy α1 was used to form a negative electrode y1, the hydrogen storage alloy α2 was used to form a negative electrode y2, the hydrogen storage alloy α3 was used to form a negative electrode y3, the hydrogen storage alloy α4 was used to form a negative electrode y4, the hydrogen storage alloy α5 was used to form a negative electrode y5, the hydrogen storage alloy α6 was used to form a negative electrode y6, the hydrogen storage alloy α7 was used to form a negative electrode y7, the hydrogen storage alloy α8 was used to form a negative electrode y8, the hydrogen storage alloy α9 was used to form a negative electrode y9, and the hydrogen storage alloy α10 was used to form a negative electrode y10.

### 3. Nickel-Hydrogen Storage Battery

Next, a separator 13 made of polyolefin nonwoven fabric having a basis weight of 55 g/cm² was interposed between the nickel positive electrode 11 (x1 or x4) and the hydrogen storage alloy negative electrode 12 (one of y1 to y10) prepared as described above, and the whole unit was rolled spirally to prepare a spiral electrode group. A substrate exposed portion 11c of the nickel positive electrode 11 was exposed at an upper part of the spiral electrode group prepared above, and a substrate exposed portion 12c of the hydrogen storage alloy negative electrode 12 was exposed at a lower part of the spiral electrode group. Next, a negative electrode collector 14 was welded to the substrate exposure portion 12c exposed from a lower end face of the obtained spiral electrode group, and a positive electrode collector 15 was welded on the substrate exposure portion 11c of the nickel electrode 11 exposed from an upper end face of the spiral electrode group to prepare an electrode assembly.

Next, the obtained electrode assembly was placed in an outer can 17 of iron plated with nickel, having a cylindrical shape with a base plate (an outer bottom face of the outer can formed a negative electrode external terminal), and then the negative electrode collector 14 was welded to an inner bottom face of the outer can 17. On the other hand, a collector lead portion 15a extended from the positive electrode collector 15 was welded to a bottom part of a sealing body 18 which was also used as a positive electrode terminal and had an insulating gasket 19 on a peripheral part thereof. The sealing body 18 had a positive electrode cap 18a, and a pressure valve (not shown) having a valve member 18b and a spring 18c was placed in the positive electrode cap 18a so as to be deformed at a predetermined pressure.

Next, after an annular groove portion 17a was formed on an upper peripheral part of the outer can 17, an alkaline electrolyte was poured, and the insulating gasket 19 fitted on the peripheral part of the sealing body 18 was placed on the annular groove portion 17a formed on the upper part of the outer can 17. Then, a mouth edge 17b of the outer can 17 was crimped to prepare a nickel-hydrogen storage battery 10 (one of A to K) of a nominal capacity of 6 Ah and of a D size (32 mm in diameter and 60 mm in height). In this case, a mixed aqueous solution of sodium hydroxide (NaOH), potassium hydroxide (KOH), and lithium hydroxide (LiOH) was poured as an alkaline electrolyte in the outer can 17 so as to be 2.5 g per battery capacity (Ah) (2.5 g/Ah).

In this case, an electrolyte having an alkaline electrolyte concentration of 7.0 mol/L (7.0 N) and a Li concentration of 0.20 mol/L (0.20 N) was regarded as an alkaline electrolyte z1. Furthermore, an electrolyte having an alkaline electrolyte concentration of 7.0 mol/L (7.0 N) and a Li concentration of 0.30 mol/L (0.30 N) was regarded as an alkaline electrolyte z2, an electrolyte having an alkaline electrolyte concentration of 6.5 mol/L (6.5 N) and a Li concentration of 0.20 mol/L (0.20 N) was regarded as an alkaline electrolyte z3, and an electrolyte having an alkaline electrolyte concentration of 6.5 mol/L (6.5 N) and a Li concentration of 0.30 mol/L (0.30 N) was regarded as an alkaline electrolyte z4.

Here, a battery using the nickel positive electrode x1, the hydrogen storage alloy negative electrode y1, and the alkaline electrolyte z1 was regarded as a battery A. In the same manner, a battery using the nickel positive electrode x4, the hydrogen storage alloy negative electrode y1, and the alkaline electrolyte z4 was regarded as a battery B, and a battery using the nickel positive electrode x4, the hydrogen storage alloy negative electrode y2, and the alkaline electrolyte z4 was regarded as a battery C. Furthermore, a battery using the nickel positive electrode x4, the hydrogen storage alloy negative electrode y3, and the alkaline electrolyte z4 was regarded as a battery D, a battery using the nickel positive electrode x4, the hydrogen storage alloy negative electrode y4, and the alkaline electrolyte z4 was regarded as a battery E, and a battery using the nickel positive electrode x4, the hydrogen storage alloy negative electrode y5, and the alkaline electrolyte z4 was regarded as a battery F.

In addition, a battery using the nickel positive electrode x4, the hydrogen storage alloy negative electrode y6, and the alkaline electrolyte z4 was regarded as a battery G, a battery using the nickel positive electrode x4, the hydrogen storage alloy negative electrode y7, and the alkaline electrolyte z4 was regarded as a battery H, and a battery using the nickel positive electrode x4, the hydrogen storage alloy negative electrode y8, and the alkaline electrolyte z4 was regarded as a battery I. Moreover, a battery using the nickel positive electrode x4, the hydrogen storage alloy negative electrode y9, and the alkaline electrolyte z4 was regarded as a battery J, and a battery using the nickel positive electrode x4, the hydrogen storage alloy negative electrode y10, and the alkaline electrolyte z4 was regarded as a battery K These relations are summarized in Table 2 as shown below.

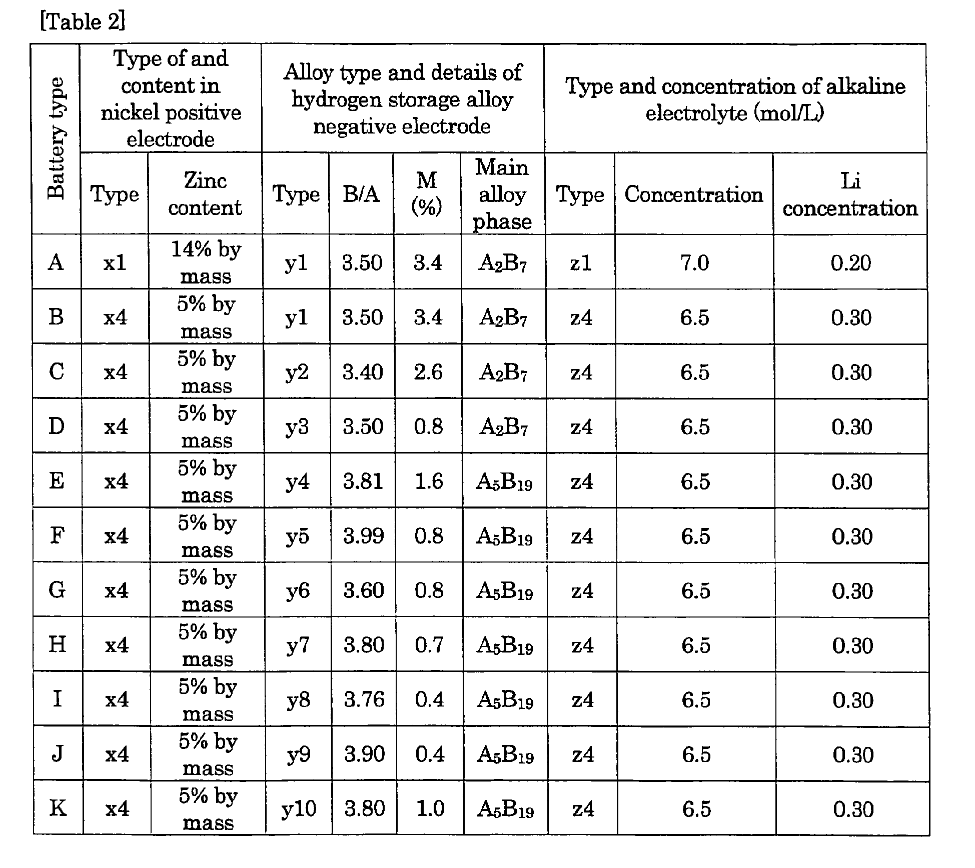

### 4. Battery Test

### (1) Initial Capacity

Each of the batteries A, B, C, D, E, F, G, H, I, J, and K, was charged in a temperature atmosphere of 25°C and at a charging current of 0.5 It to 120% of the battery capacity (nominal capacity), and after stopping being charged for 1 hour, discharged at a discharging current of 1.0 It until the battery voltage reached 1.0 V. Then, an initial capacity X1 of each of the batteries A, B, C, D, E, F, G, H, I, J, and K was obtained from time spent for the discharge.

### (2) Capacity after Partial Charge-Discharge Cycle

Next, a partial charge-discharge cycle test was performed in the following manner by using the batteries A, B, C, D, E, F, G, H, I, J, and K. A charge-discharge cycle was repeated in which each of the batteries was charged in a temperature atmosphere of 25°C and at a charging current of 10 It until the voltage reached a level at which a state of charge (SOC) was 80% of the initial capacity X1, and then each battery was discharged at a discharging current of 10 It until the voltage reached a level at which an SOC was 20%. Then, the partial charge-discharge cycle was repeated until the discharged electricity quantity reached 50 kAh, and a partial discharge capacity X2 immediately before the discharged electricity quantity reached 50 kA was obtained. Then, using the partial discharge capacities X2 thus obtained and assuming the partial discharge capacity X2 of the battery A as 100, the ratio (to the battery A) of the partial discharge capacity X2 of each of the batteries other than the battery A to that of the battery A was obtained, and the results are shown in Table 3 below.

### (3) Battery Output at -10°C

In addition, each of the batteries A, B, C, D, E, F, G, H, I, J, and K after the partial charge-discharge cycle was charged in a temperature atmosphere of 25°C and at a charging current of 1.0 It to 50% of the battery capacity (nominal capacity). Next, each of the batteries was stored in a temperature atmosphere of -10°C for 3 hours, then discharged at an arbitrary discharge rate for 10 seconds, and then the product of voltage and current of the battery after the 10 seconds was regarded as a battery output Y1 at - 10°C. Then, using the battery outputs Y1 at -10°C thus obtained and assuming the battery output Y1 at -10°C of the battery A as 100, the ratio (to the battery A) of the battery output Y1 at -10°C of each of the batteries other than the battery A to that of the battery A was obtained, and the results are shown in Table 3 below.

### (4) Negative-Electrode Discharge Reserve

Furthermore, by using each of the batteries A, B, C, D, E, F, G, H, I, J, and K after the partial charge-discharge cycle, a negative-electrode discharge reserve was obtained as follows. In this case, first of all, each of the batteries A, B, C, D, E, F, G, H, I, J, and K was discharged into an electrolyte-rich state, and each discharged battery was arranged with a reference electrode (Hg/HgO). Next, after the positive electrode active material reached a fully discharged state, the battery was discharged in a temperature atmosphere of 25°C and at a discharging current of 1.0 It until the negative electrode potential reached -0.3 V against the reference electrode (Hg/HgO), and a capacity of the negative electrode during the discharge at a current of 1 It was obtained from time spent for the discharge.

The battery was stopped from being discharged for 10 minutes, and then was discharged at a discharging current of 0.1 It until the negative electrode potential reached -0.3 V against the reference electrode (Hg/HgO), and a capacity of the negative electrode during the discharge at a current of 0.1 It was obtained from time spent for the discharge. The sum of the capacity during the discharge at a current of 1 It and the capacity during the discharge at a current of 0.1 It that were obtained was regarded as a negative electrode discharge reserve Z1. Then, using the negative electrode discharge reserve Z1 thus obtained and assuming the negative electrode discharge reserve Z1 of the battery A as 100, the ratio (to the battery A) of the negative electrode discharge reserve Z1 of each of the batteries other than the battery A to that of the battery A was obtained, and the results are shown in Table 3 below.

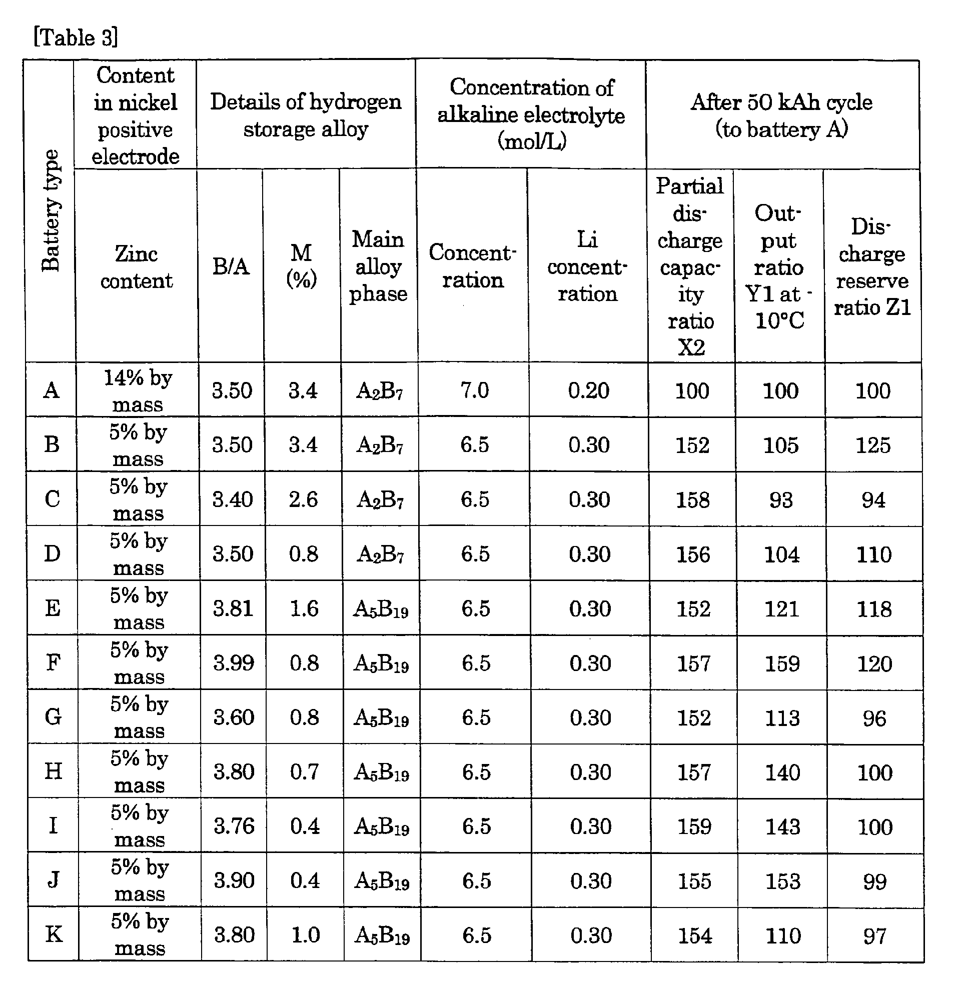

Based on the results shown in Table 3 above, effects of composition of the hydrogen storage alloy that is represented by a general formula of Ln₁₋ₓMgₓNi_{y-a}Mₐ (where Ln is an element selected from rare earth elements including yttrium (Y), and M is at least one kind of element selected from Al, Co, Mn, and Zn) were studied as described below. Here, according to the results in Table 3, for the battery B in which the Zn amount of the positive electrode was reduced from 14% by mass to 5% by mass, the electrolyte concentration was reduced to 6.5 mol/L, and the Li amount in the electrolyte was increased to 0.30 mol/L compared with those of the battery A, it is found the that long-term reliability was reduced because the negative electrode discharge reserve Z1 greatly increased although the partial discharge capacity X2 and the battery output Y1 increased.

On the other hand, for the battery C in which the Zn amount of the positive electrode, the electrolyte concentration, and the Li amount in the electrolyte were unchanged but the alloy composition was changed compared with those of the battery B, it is found that the battery output Y1 at -10°C was reduced although the negative electrode discharge reserve Z1 was reduced. In addition, for each of the batteries D, E, and F in which the Zn amount of the positive electrode, the electrolyte concentration, and the Li amount in the electrolyte were unchanged but the alloy composition was changed compared with those of the battery B, it is found that the battery output Y1 at - 10°C increased, and also the negative electrode discharge reserve Z1 increased.

In comparison with these batteries, in each of the batteries G, H, I, J, and K, it is found that the partial discharge capacity X2 and the low-temperature output Y1 at - 10°C were increased and the same or lower negative electrode discharge reserve Z1 was obtained compared with those of the battery A, thus satisfying both maintenance of the low-temperature output and reduction in the negative electrode discharge reserve. The reason for this is considered to be that, in each of the batteries G, H, I, J, and K, the B/A of the hydrogen storage alloy used for the negative electrode was 3.60 or more, the content of the element M was 1.0% by mass or less, the electrolyte concentration was 6.5 mol/L, the Li amount in the electrolyte was 0.30 mol/L, and the Zn amount of the positive electrode was 5 % by mass or less.

From these results, it can be said that the hydrogen storage alloy used for the negative electrode needs to be represented by a general formula of Ln₁₋ₓMgₓNi_{y-a}Mₐ (where Ln is an element selected from rare earth elements including yttrium (Y), and M is at least one kind of element selected from Al, Co, Mn, and Zn), and needs to have the B/A of 3.60 or more, and the content of the element M of 1.0% by mass or less.

5. Concentration of Electrolyte, Li Concentration in Electrolyte, and Zinc Content in Positive Electrode

Next, the concentration of the electrolyte, the Li concentration in the electrolyte, and the zinc content in the positive electrode were studied. Therefore, the negative electrode y6 having, as a negative electrode active material, the hydrogen storage alloy α6 represented by a compositional formula of Ln_{0.18}Nd_{0.71}Mg_{0.11}Ni_{3.50}Al_{0.10} was used as the hydrogen storage alloy negative electrode 12, and the nickel positive electrodes 11 (x1 to x5) and the alkaline electrolytes z1 to z4 were also used to prepare batteries L to R constituted as shown in Table 4 below, in the same manner as described above. Note that the battery G described above is also shown in Table 4 below.

In this case, a battery using the nickel positive electrode x1, the hydrogen storage alloy negative electrode y6, and the alkaline electrolyte z1 was regarded as the battery L. In the same manner, a battery using the nickel positive electrode x4, the hydrogen storage alloy negative electrode y6, and the alkaline electrolyte z1 was regarded as the battery M, and a battery using the nickel positive electrode x1, the hydrogen storage alloy negative electrode y6, and the alkaline electrolyte z2 was regarded as the battery N. In addition, a battery using the nickel positive electrode x1, the hydrogen storage alloy negative electrode y6, and the alkaline electrolyte z3 was regarded as the battery O. Furthermore, a battery using the nickel positive electrode x2, the hydrogen storage alloy negative electrode y6, and the alkaline electrolyte z4 was regarded as the battery P, a battery using the nickel positive electrode x3, the hydrogen storage alloy negative electrode y6, and the alkaline electrolyte z4 was regarded as the battery Q, and a battery using the nickel positive electrode x5, the hydrogen storage alloy negative electrode y6, and the alkaline electrolyte z4 was regarded as the battery R.

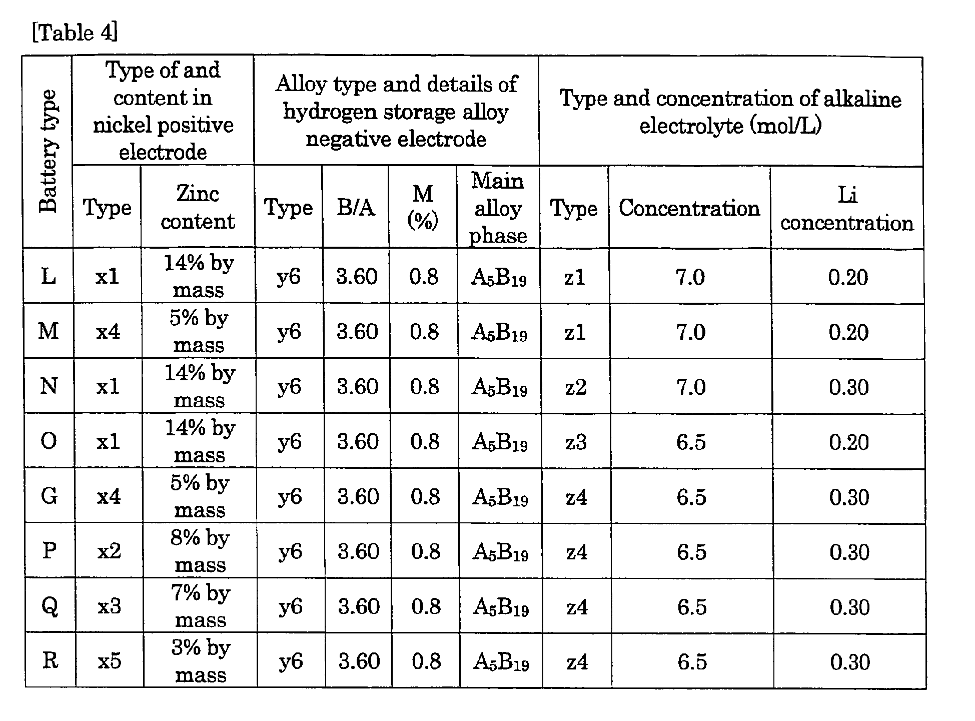

In the same manner as described above, each of the batteries L, M, N, O, P, Q, and R was charged at 25°C and at a charging current of 0.5 It to 120% of the battery capacity (nominal capacity), and after stopping being charged for 1 hour, discharged at a discharging current of 1.0 It until the battery voltage reached 1.0 V. Then, the initial capacity X1 of each of the batteries L, M, N, O, P, Q, and R was obtained from time spent for the discharge. Then, the partial discharge capacity X2 immediately before the discharged electricity quantity reached 50 kA, the battery output Y1 at -10°C, and the discharge reserve Z1 were obtained in the same manner as described above.

Then, using the partial discharge capacities X2 thus obtained and assuming the partial discharge capacity X2 of the battery A as 100, the ratio (to the battery A) of the partial discharge capacity X2 of each of the batteries other than the battery A to that of the battery A was obtained, and the results are shown in Table 5 below. In addition, assuming the battery output Y1 at -10°C of the battery A as 100, the ratio (to the battery A) of the battery output Y1 at -10°C of each of the batteries other than the battery A to that of the battery A was obtained, and the results are shown in Table 5 below. Furthermore, assuming the discharge reserve Z1 of the battery A as 100, the ratio (to the battery A) of the discharge reserve Z1 of each of the batteries other than the battery A to that of the battery A was obtained, and the results are shown in Table 5 below. Note that the results for the battery G described above are also shown in Table 5 below.

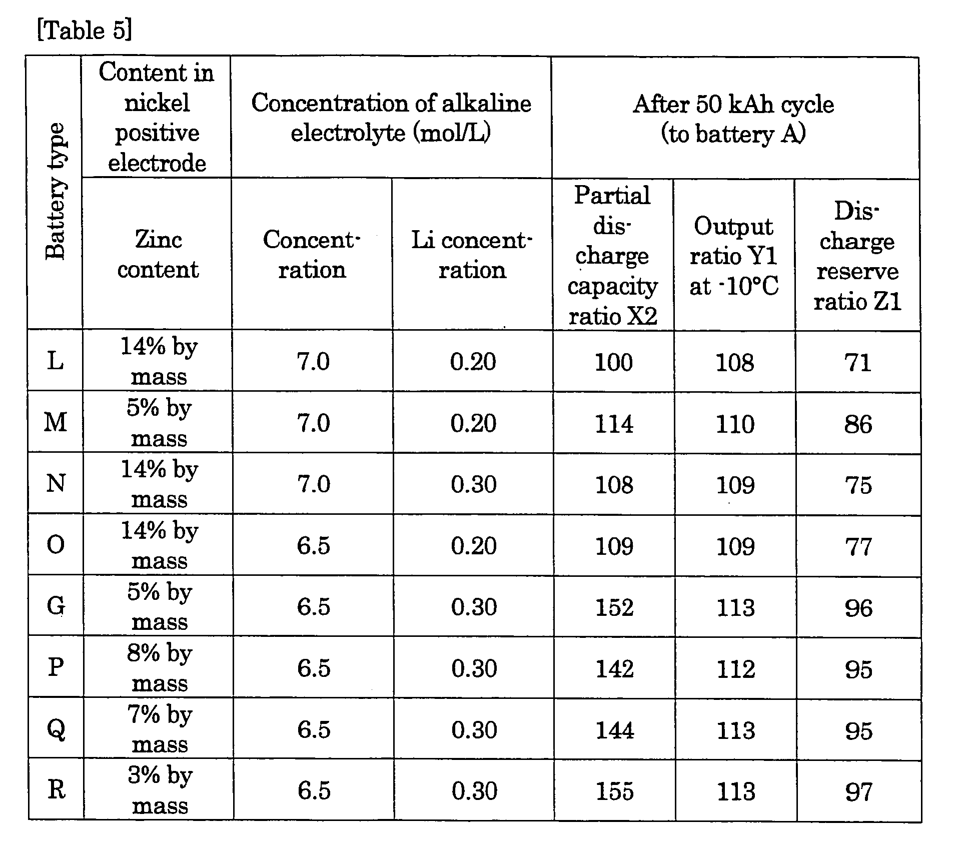

The results shown in Table 5 above have demonstrated the following. That is, compared with the battery L, each of the battery M having a reduced zinc content in the positive electrode, the battery N having an increased Li concentration of the electrolyte, and the battery O having a reduced electrolyte concentration has a slightly improved level of the partial discharge capacity ratio X2, but the effect of the improvement is not sufficient.

In contrast to those batteries, each of the batteries G, P, Q, and R having a reduced zinc content in the positive electrode, a reduced electrolyte concentration, and an increased Li concentration of the electrolyte has a greatly improved level of the partial discharge capacity ratio X2. In addition, as the zinc content in the positive electrode is reduced in the order of the batteries P, Q, G, and R, the partial discharge capacity ratio X2 is improved. The reason for this is that a memory effect associated with the partial charge-discharge cycle can be more inhibited as the addition amount of zinc in the nickel positive electrode is reduced, thereby improving a capacity retention ratio after the partial charge-discharge cycle. As a result, it can be said that the zinc content in the positive electrode is preferably in the range of 3% by mass to 8% by mass.

Taking into overall consideration the results shown in Tables 3 and 5 above, it can be said that the following conditions are preferred to be satisfied because satisfying the conditions enables reduction in accumulation of the negative-electrode discharge reserve and improvement in the long-term reliability from the previous level while inhibiting the memory effect without reducing the low-temperature output.
One of the conditions is that the addition amount of zinc contained in a positive electrode binder is reduced to 8% by mass or less with respect to the mass of nickel in the positive electrode active material, the concentration of the alkaline electrolyte is as low as 6.5 mol/L or less, and the amount of lithium (Li) contained in the alkaline electrolyte is increased to 0.3 mol/L or more, to obtain a battery with inhibited memory effect.
Furthermore, by satisfying the other condition that the hydrogen storage alloy of the negative electrode has a crystal structure of an A₅B₁₉ type structure, with a stoichiometric ratio (B/A) representing the molar ratio of component B to component A of the A₅B₁₉ type structure ranging from 3.6 to 3.9, inclusive, and is represented by a general formula of Ln₁₋ₓMgₓNi_{y-a}Mₐ (where Ln is an element selected from rare earth elements including yttrium (Y), and M is at least one kind of element selected from Al, Co, Mn, and Zn) in which the content of the element M is 1.0% by mass or less, accumulation of the negative-electrode discharge reserve is reduced without reducing the low-temperature output.

A general condition for partial charge-discharge control can be defined that discharging is stopped and charging is started when the voltage reaches a level at which no variation occurs among a plurality of batteries combined in a battery pack (in this case, a voltage level reaching a state of charge (SOC) of 10%), and charging is stopped and discharging is started when the voltage reaches a level just before reaching the oxygen overvoltage (in this case, a voltage level reaching an SOC of 95%). However, practically, it is preferred that the partial charging-discharging be controlled so that discharging is stopped and charging is started when the voltage level reaches an SOC of 20%, and so that charging is stopped and discharging is started when the voltage level reaches an SOC of 80%.

## Claims

1. An alkaline storage battery system comprising:
an alkaline storage battery including:
an electrode group having a hydrogen storage alloy negative electrode using a hydrogen storage alloy as a negative electrode active material, a nickel positive electrode using nickel hydroxide as a main positive electrode active material, and a separator;
an alkaline electrolyte; and
an outer can accommodating the electrode group and the alkaline electrolyte; and
a partial charge-discharge controller;
in the nickel positive electrode, zinc (Zn) being added to nickel hydroxide that is the main positive electrode active material with an addition amount of 8% by mass or less with respect to the mass of nickel in the positive electrode active material,
the hydrogen storage alloy having a crystal structure of an A₅B₁₉ type structure, with a stoichiometric ratio (B/A) representing the molar ratio of component B to component A of the A₅B₁₉ type structure ranging from 3.6 to 3.9, inclusive, and being represented by a general formula of Ln₁₋ₓMgₓNi_{y-a}Mₐ (where Ln is an element selected from rare earth elements including yttrium (Y), and M is at least one kind of element selected from Al, Co, Mn, and Zn) in which the content of the element M is 1.0% by mass or less,
the alkaline electrolyte having a concentration of 6.5 mol/L or less,
the alkaline electrolyte containing lithium (Li) of 0.3 mol/L or more, and
the alkaline storage battery system being arranged to control partial charging-discharging.

2. The alkaline storage battery system according to claim 1, wherein the nickel positive electrode is formed of a nickel sintered substrate having pores filled with at least nickel hydroxide as the main positive electrode active material and zinc by impregnation treatment with an impregnation liquid and alkaline treatment.

3. The alkaline storage battery system according to claim 1 or 2, wherein the alkaline electrolyte contains sodium hydroxide, potassium hydroxide, and lithium hydroxide.

4. The alkaline storage battery system according to any one of claims 1 to 3, wherein the partial charging-discharging is controlled so that discharging is stopped and charging is started when the voltage level reaches a state of charge (SOC) of 20% and so that charging is stopped and discharging is started when the voltage level reaches an SOC of 80%.
